# EUROPÄISCHE PATENTSCHRIFT

(11) **EP 0 812 807 B1**
(45) Veröffentlichungstag und Bekanntmachung des Hinweises auf die Patenterteilung: **02.05.2001**
(21) Anmeldenummer: 97109253.1
(22) Anmeldetag: 07.06.1997
(51) Int. Cl.: C02F 3/06, C02F 3/28

(54) **Verfahren und Reaktor zur kontinuierlichen mikrobiologischen Behandlung von hochbelastetem Abwasser**
Process and reactor for continuously microbiologically treating highly loaded wastewater
Procédé et réacteur pour le traitement microbiologique continue des eaux usées fortement polluées

(30) Priorität: 13.06.1996 DE 19623592
(43) Veröffentlichungstag der Anmeldung: 17.12.1997
(73) Patentinhaber: Hahnewald GmbH Chemisch-Physikalische Wasseraufbereitungsanlagen, 01189 Dresden (DE)
(72) Erfinder: Haldenwang, Lutz, Dr.rer.nat., 01445 Radebeul (DE); Hahnewald, Dieter, 01259 Dresden (DE)
(74) Vertreter: Hofmann, Klaus

(56) Entgegenhaltungen:
- EP-A- 0 531 586
- EP-A- 0 667 319
- DE-A- 3 631 817
- US-A- 3 928 190

## Beschreibung

Die vorliegende Erfindung ist überall dort einsetzbar, wo Abwasser im kontinuierlichen Betrieb unter anaeroben oder aeroben Bedingungen biologisch behandelt werden soll. Im Gegensatz zu physikalisch-chemischen Technologien, welche entweder nur zu einer Verlagerung der organischen Fracht führen oder sehr hohe Betriebskosten verursachen, wird beim Einsatz von Bioreaktoren ein Großteil der organischen Belastung effektiv zu Kohlendioxid und Wasser abgebaut.

Die Raumabbauleistung bzw. die notwendige Größe eines biologisch arbeitenden Reaktors ist direkt von der Konzentration an aktiver Biomasse abhängig. Deshalb ist es notwendig, die jeweils am Prozeß beteiligten Mikroorganismen im Reaktionsraum auf ein möglichst hohes Maß zu konzentrieren.

In modernen biologischen Verfahren zur Wasserbehandlung werden die Mikroorganismen durch Aufwuchs an geeignete Trägermaterialien im Reaktor konzentriert und zurückgehalten. Dabei erreichen Biofilter mit spezifischen Aufwuchskörpern und Wirbelschichtverfahren mit kleinkörnigen Trägermaterialien die höchsten Biomassekonzentrationen.

So wird in DE 36 31 817 A eine Rieselfilmreaktor zur kontinuierlichen Eliminierung gelöster Wasserinhaltsstoffe aus weitestgehend schwebstofffreien Wässern beschrieben. Dabei werden die Vorteile einer Trockenfilter-, Naßfilter- und Sedimentationsstufe vereinigt. Dazu enthält der düsenbodenlose Rieselfilmreaktor frei schwimmendes Füllkörpermaterial mit einer Dichte wesentlich kleiner als 1 g/m³ und eine Einstauhöhenregulierung. Auf diese Weise werden eine Trockenfilterzone aus nicht eingetauchten Füllkörpermaterial, eine Naßfilterzone aus eingetauchten Füllkörpermaterial und eine Sedimentationszone unterhalb des frei schwimmenden Füllkörpermaterials ausgebildet.

In EP 0 531 586 A wird eine aufschwimmende und voll eingestaute Filterschicht mit anaeroben biologischen Prozessen kombiniert. Durch Verwendung von lipophilen Materialien für die schwimmende Filterschicht wird vorrangig die Behandlung von ölhaligen Abwässern möglich. Ölige Substanzen in Form von kleinen Partikeln und Emilsionen werden durch Adsorption in der schwimmenden Filterschicht an der Oberfläche der kleinen Teile zurückgehalten und durch anaerobe Bakterien umgesetzt. Der dabei entstehende Bioschlamm und schwere Substanzen sinken auf den Boden des Kessels und werden dort abgezogen. In bestimmten Zeitabständen ist es notwendig, die schwimmende Filterschicht rückzuspülen.

Dagegen wird in EP 0 667 319 A ein nicht eingestautes Trägermaterialbett für den Aufwuchs von Mikroorganismen zur aeroben Abwasserbehandlung verwendet. Die biologisch hoch aktive Trägermaterialschüttung wird dabei vom zu behandelnden Abwasser von oben nach unten gleichmäßig überrieselt und im Gegenstrom mit Hilfe eines einfachen Ventilators belüftet. Durch geringe Stoffübergangswege zwischen Mikroorganismen, Sauerstoff im Überschuß und abwärts rieselndem Abwasser sind sehr hohe Raumabbauleistungen möglich. Da aber nur die Oberfläche des Biofilms an Trägermaterial ausreichend mit Nährstoffen, Sauerstoff sowie den abzubauenden Schadstoffen versorgt wird, sind die unteren Zellschichten nur wenig oder nicht am Prozeß beteiligt. Außerdem wird in Abhängigkeit vom Verfahrensprinzip ein Drittel bis zur Hälfte des nutzbaren Reaktionsraumes vom Volumen des Aufwuchsträgermaterials eingenommen.

Liegen dagegen die Mikroorganismen als Suspension, das heißt in Form einzelner Zellen oder Zellaggregate im Reaktionsraum fein verteilt vor, kann eine wesentlich höhere Biomassekonzentration mit einem weitgehend ungehinderten Stoffaustausch erreicht werden.

Der entscheidende Nachteil derartiger Reaktoren ist der sehr große Aufwand für die kontinuierliche Abtrennung der Biomasse im behandelten Wasser. Da die mit dem Abbauprozeß gleichmäßig nachwachsenden Mikroorganismen im Reaktor fein verteilt und nicht immobilisiert sind, werden sie mit dem Strom des zu behandelnden Wassers kontinuierlich ausgewaschen.

In den bekannten kontinuierlich arbeitenden Reaktoren mit suspendierter Biomasse muß deshalb die Biomasse kontinuierlich aus dem ablaufenden Wasser abgetrennt und zu einem Teil in den Reaktionsraum zurückgefördert werden. Der Aufwand für diese Nachklärung des Wassers steigt mit zunehmender Konzentration der Mikroorganismen im Reaktor stark an. So wird z.B. der Gehalt der für die Höhe der Abbauleistung verantwortlichen Biomasse beim Belebtschlammverfahren in Kläranlagen bei ca. 4 g/l BTS (Biomassetrockensubstanz) gehalten, um die Kosten für die nachfolgende Stufe zur Schlammabtrennung und -rückführung auf ein sinnvolles Maß zu begrenzen.

Auch moderne Reaktoren, welche mit suspendierter Biomasse arbeiten und spezifische Einrichtungen für die optimale Verteilung von Luft und Abwasser besitzen, benötigen ein nachgeschaltetes Sedimentationsbecken zur Abtrennung und teilweisen Rückführung der ausgetragenen Biomasse, was beispielsweise in EP 03 06 054 A1 beschrieben ist.

In den letzten Jahren sind verschiedene Versuche unternommen worden, um einen größeren Teil der Mikroorganismen bereits im Bioreaktor bzw. im Reaktionsbecken zurückzuhalten und zu konzentrieren. Auf diese Weise soll bei gleichbleibendem Aufwand für die Nachklärung eine höhere Raumabbauleistung realisiert werden.

In DE 43 29 239 A1 wird der Einbau schräger Lamellenpakete am Ende des Strömungsweges im Belebtschlammbecken für die Erhöhung der Bioschlammkonzentration von normalerweise etwa 4 auf 5 - 7 g BTS pro Liter vorgeschlagen. Ähnlich dazu wird in EP 04 06 689 A1 die Erhöhung der Biomassekonzentration in anaerob arbeitenden Bioreaktoren durch Einsatz der an sich bekannten Röhrensedimentation beschrieben. Nach WO 89/09 193 wird die Flockenbildung im Belebtschlammbecken durch die Nachschaltung einer zusätzlichen unbelüfteten Zone mit separater Rühreinrichtung verbessert. Alle drei beschriebenen Verfahren benötigen einen hohen apparativen Mehraufwand und erreichen nur eine verhältnismäßig geringe Steigerung der Raumabbauleistung.

DE 35 26 183 A1 beschreibt eine Möglichkeit zur Erhöhung der Biomassekonzentration im Reaktionsraum durch eine prinzipielle Verbesserung der Abtrennung der Mikroorganismen von der Klärflüssigkeit. Dazu erfolgt durch eine Vereinigung der Biomasse mit magnetisch abscheidbaren anorganischen Stoffen eine Verbesserung des Sedimentationsverhaltens des Schlammes oder eine Abtrennung mit Hilfe von Magnetfeldern. Die entscheidenden Nachteile dieser Erfindung sind der hohe technische Aufwand sowie die zusätzliche Belastung des Bioschlammes mit Fremdstoffen, insbesondere Schwermetalloxiden.

Eine weitere Veröffentlichung DE 195 07 456 A1 beschreibt den Einsatz eines speziellen Zyklonreaktors mit einem kontinuierlichen Abwasserzufluß und der Zumischung eines sauerstoffhaltigen Gases. Auf diese Weise ist es möglich, eine sehr hohe Biomassekonzentration einzustellen, welche aber nur durch eine in den Umlauf integrierte Mikrofiltrations- einheit im Reaktor zurückgehalten werden kann. Ein zusätzlicher Nachteil dieser Technologie ist der außerordentlich hohe Energiebedarf von bis zu 40 kW/m³.

Als weiterer Stand der Technik können DE 30 32 869 A1 und DE 42 01 167 A1 zitiert werden. In DE 30 32 869 A1 werden zur anaeroben Reinigung von Abwasser als Trägermaterialien makroporöse Stoffe eingesetzt. Bei Durchfluß von unten nach oben kann ein Wirbelbett erzeugt werden. In DE 42 01 167 A1 werden die eingesetzten Trägerkörper von einem Gas-Flüssigkeits-Fördermedium im Kreislauf durch eine zentrale Zone hoher Turbulenz in Abwärtsrichtung und danach einer Richtungsumkehr unterworfen.

Die Konzentration der Mikroorganismen im Reaktionsraum ist bei beiden Veröffentlichungen lediglich von der besiedelbaren Oberfläche des Aufwuchsträgermaterials abhängig, wobei eine Aufkonzentration nicht vorgesehen ist.

Der vorliegenden Erfindung liegt das Problem zugrunde, daß keine Technologie bekannt ist, bei welcher die Konzentration der Mikroorganismen im Reaktionsraum gegenüber den herkömmlichen Verfahren deutlich erhöht werden kann, ohne daß der Aufwand für die Nachklärung des abfließenden Wassers stark vergrößert werden muß.

Aufgabe der Erfindung ist es, ein Verfahren und einen Reaktor zu entwickeln, mit deren Hilfe bei vergleichbarem Aufwand für Investitionen und Betrieb der Nachklärung die Biomassekonzentration und damit die Raumabbauleistung von kontinuierlich arbeitenden Bioreaktoren und Reaktionsbecken nach dem Belebtschlammprinzip deutlich erhöht wird.

Diese Aufgabe wird erfindungsgemäß mit dem Verfahrensanspruch 1 und dem Sachanspruch 5 gelöst. Hierbei wird das mit suspendierter Biomasse behandelte Wasser bei seinem kontinuierlichen Abfluß aus dem Reaktionsraum durch eine Filterschicht aus einem kleinkörnigen schwimmfähigen Aufwuchsträgermaterial für Mikroorganismen geleitet.

Die an der Oberfläche des Materials sowie in den Porenräumen zwischen den einzelnen Körnern wachsende Biomasse bildet ein dichtes Sekundärfilter aus und hält einen großen Teil der suspendierten Mikroorganismen im Reaktionsraum zurück.

Bei einer Zunahme des Druckverlustes in der Filterschicht bzw. bei einer Abnahme der Menge des abfließenden Wassers durch weiteres Biomassewachstum erfolgt eine Regenerierung auf einfache Weise. Dazu wird die schwimmende Filterschicht durch Eintrag eines Gases von unten oder durch kurzzeitige Erhöhung der Abströmgeschwindigkeit kurzzeitig derart auseinandergezogen und verwirbelt, daß ein Teil der Biomasse von den Körnern abgerieben wird, zum Boden des Reaktors sinkt und von dort abgezogen werden kann.

Der mit der Erfindung erzielte Vorteil besteht insbesondere darin, daß trotz eines kontinuierlichen Rohwasserzuflusses und eines kontinuierlichen Reinwasserabflusses im Bioreaktor oder im Reaktionsbecken eine sehr hohe Konzentration suspendierter Biomasse eingestellt und aufrechterhalten werden kann, welche ein Vielfaches über den Werten herkömmlicher Verfahren liegt und daß gleichzeitig der Aufwand für die Nachbehandlung des behandelten Wassers gleichbleibt oder nur unwesentlich ansteigt.

Unter sonst gleichen Bedingungen ist die erreichbare Leistung eines biologisch arbeitenden Reaktors direkt von der Konzentration aktiver Mikroorganismen abhängig. Erfindungsgemäß liegt die Biomasse in sehr hoher Konzentration feinverteilt in Form einzelner Zellen und Zellaggregate vor, so daß ein völlig ungehinderter Kontakt zu den abzubauenden Schadstoffen des Abwassers und den notwendigen Nährstoffen besteht.

Daraus ergibt sich eine außerordentlich hohe Raumabbauleistung bzw. ein sehr kleines Reaktorvolumen. Schadstoffe, welche mit herkömmlichen Verfahren nur sehr langsam abgebaut werden, können dementsprechend mit einer wesentlich verkürzten Verweilzeit behandelt werden.

Nach Anspruch 2 wird das Wasser im Behälter durch konti nuierliches Verrühren oder durch eine vielfache Kreislaufführung derart vermischt, daß eine weitgehend gleichmäßige Verteilung der Biomasse und des Rohwassers vorliegt.

In Abhängigkeit von der Art des Abwassers sowie der Art der entsprechenden biotechnischen Prozesse und der daran beteiligten Mikroorganismen, kann die Bildung von Biomasse flocken durch Zugabe eines Flockungsmittels nach Anspruch 3 vorteilhaft für die Stabilität des Verfahrens sein.

Das beschriebene Verfahren eignet sich für die Durchführung von sowohl anaeroben als auch aeroben Verfahren. Für die Durchführung von Prozessen mit aeroben Mikroorganismen kann gemäß Anspruch 4 die kontinuierliche Zugabe von Luft oder reinem Sauerstoff erfolgen.

Der Siebboden, welcher die Filterschicht aus schwimmendem körnigem Aufwuchsträgermaterial nach oben begrenzt, besteht nach Anspruch 6 aus einem Siebgitter und einer Schüttschicht aus Kieseln oder nach Anspruch 7 aus einer durch zwei Siebgitter gehaltenen Schicht aus Schaumpolystyrenkugeln.

Nachfolgend wird die Erfindung an einem Ausführungsbeispiel und einer zugehörigen Abbildung näher erläutert:

In einem Betrieb der Pharmazeutischen Industrie fällt ein Abwasser mit der sehr hohen Belastung von 510 mg/l AOX (an Aktivkohle adsorbierbare halogenierte Kohlenwasserstoffe) an. Da physikalisch-chemische Technologien sehr hohe Energiekosten verursachen, soll ein biologisches Verfahren eingesetzt werden, um einen Restgehalt von < 20 mg AOX/l sicher einzuhalten.

Die AOX-verursachende Verbindung ist biologisch nur verhältnismäßig langsam abbaubar.

Ein zylinderförmiger Reaktor 1 enthält in seinem unteren Teil vor dem Ablauf des behandelten Wassers eine Filterschicht aus einem schwimmenden, kleinkörnigen Trägermaterial 2, um die im Wasser suspendierte Biomasse abzutrennen und im Reaktionsraum 12 zurückzuhalten. Als Aufwuchsträgermaterial wird gesintertes Schaumpolystyren in einer Körnung zwischen 2 und 6 mm verwendet, welches eine spezifische Dichte von 0,65 g/cm³ besitzt und sich mit seiner großen zerklüfteten und porösen Oberfläche sehr gut für den schnellen Aufwuchs von Mikroorganismen eignet. Das Filterbett mit einer Höhe von 45 cm wird nach oben von einem Siebboden 3 mit einer Maschenbreite von 4 mm und einer darauf liegenden Schicht 4 aus Kieseln mit einer Größe zwischen 10 und 20 mm begrenzt und gehalten.

Das über eine Dosiereinrichtung mit den Nährstoffen Ammonium und Phosphat angereicherte Rohwasser 5 fließt dem Reaktor 1 über eine Verteilereinrichtung 6 kontinuierlich von oben zu.

Der notwendige Sauerstoff wird oberhalb des Filterbettes bzw. der Schicht aus Kieseln über eine feinblasige Druckbelüftung 7 eingetragen. Mit Hilfe eines Überlaufes 8 erfolgt die kontinuierliche Reinwasserentnahme unterhalb der Filterschicht am Boden des Reaktors.

Das Trägermaterial bildet innerhalb von 30 Tagen nach Inbetriebnahme zusammen mit der auf der Trägeroberfläche und in den Räumen zwischen den einzelnen Körnern aufwachsenden Biomasse ein dichtes Filter aus, welches einerseits vom behandelten Wasser ungehindert durchströmt wird und andererseits einen Großteil der suspendierten Biomasse im Reaktionsraum 12 zurückhält, so daß eine sehr hohe Biomassekonzentration und dementsprechend hohe Raumabbauleistung stabil aufrecht erhalten wird.

Durch einen kurzzeitigen Starklufteintrag im Abstand von 10 bis 12 Tagen erfolgt der Abrieb überschüssiger Biomasse aus dem Filterbett. Dazu befinden sich 25 cm unterhalb der Filterschicht zwei Lufteintragsstutzen 9 mit Gebläseanschluß. Der abgeriebene Bioschlamm setzt sich am Reaktorboden ab und wird diskontinuierlich über einen Schlammabzug 10 aus dem System entnommen. Über einen Stutzen 11 oberhalb der Filterschicht kann ebenfalls diskontinuierlich überschüssige Biomasse entnommen werden.

Durch die Anwendung der vorliegenden Erfindung ist es möglich, eine so hohe Konzentration aktiver Mikroorganismen zu erreichen, daß Volumen und Platzbedarf des notwendigen Bioreaktors vergleichsweise sehr klein gehalten werden können.

### Bezugszeichenaufstellung

- 1: Reaktor
- 2: Trägermaterial
- 3: Siebboden
- 4: Kieselschicht
- 5: Rohwasser
- 6: Verteilereinrichtung
- 7: Druckbelüftung
- 8: Überlauf
- 9: Gebläseanschluß
- 10: Schlammabzug
- 11: Schlammabzug
- 12: Reaktionsraum

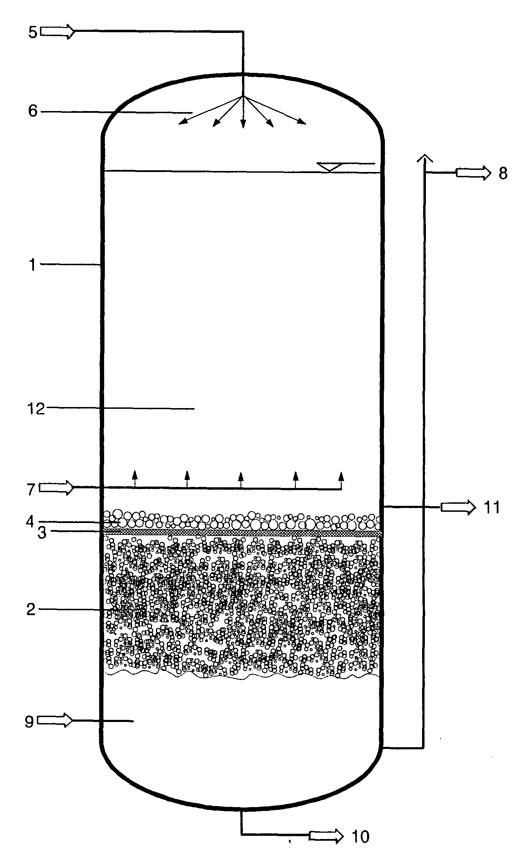

## Patentansprüche

1. Verfahren zur kontinuierlichen mikrobiologischen Behandlung von hochbelastetem Abwasser in Reaktoren mit Biomasse in Form suspendierter Mikroorganismen oder Mikroorganismenflocken, dadurch gekennzeichnet,
daß das zu behandelnde Abwasser von oben nach unten einen Reaktionsraum durchfließt und dort unter Anwesenheit von suspendierter Biomasse biologisch behandelt wird, anschließend durch eine Filterschicht aus einem zum Aufwuchs von Mikroorganismen geeigneten schwimmfähigen Trägermaterial mit einer Dichte kleiner als Eins und einer Körnung im Bereich zwischen ein und zwanzig Millimeter fließt, welche durch die auf der Oberfläche des Filterkorns und in den Porenräumen aufwachsende und als Sekundärfilter wirkende Biomasse einen Teil der suspendierten Mikroorganismen im Reaktionsraum zurückhält und aufkonzentriert und welche durch das diskontinuierliche Einblasen eines Gases oder durch die Erhöhung der Strömungsgeschwindigkeit im Reaktor derart verwirbelt werden kann, daß sich ein Teil der aufgewachsenen Biomasse aus der schwimmenden Filterschicht löst und am Boden des Reaktors abgezogen wird.

2. Verfahren nach Anspruch 1, dadurch gekennzeichnet, daß durch Verrühren oder Einstellen eines Kreislaufes im Wasserkörper oberhalb der Filterschicht eine vollständige Durchmischung erfolgt.

3. Verfahren nach den Ansprüchen 1 oder 2, dadurch gekennzeichnet, daß in den Reaktionsraum Flockungsmittel zugegeben wird.

4. Verfahren nach den Ansprüchen 1 bis 3, dadurch gekennzeichnet, daß in den Reaktionsraum Luft oder reiner Sauerstoff eingetragen wird.

5. Reaktor zur kontinuierlichen mikrobiologischen Behandlung von hochbelastetem Abwasser in Reaktoren mit Biomasse in Form suspendierter Mikroorganismen oder Mikroorganismenflocken, mit Einrichtungen für Rohwasserzulauf (5,6), Reinwasserablauf (8) und Nährstoffdosierung zur Durchführung des Verfahrens nach Anspruch 1, dadurch gekennzeichnet,
daß der Reaktor (1) unterhalb eines trägermaterialfreien Reaktionsraumes (12) einen Siebboden (3) besitzt, welcher für die einzelnen Körner einer darunter schwimmenden Schicht eines Aufwuchsträgermaterials (2) mit einer Dichte kleiner als 1 g/cm³ und einer Körnung im Bereich zwischen ein und zwanzig Millimeter undurchlässig ist und daß unterhalb dieses Siebbodens (3) mit Filterschicht ein Zuführstutzen (9) für den diskontinuierlichen Eintrag eines Gases und im oberen Teil des Reaktors (1) eine entsprechende Gasaustrittsöffnung sowie am Boden des Reaktors (1) eine Schlammabzugseinrichtung (10) und oberhalb des Siebbodens (3) eine Schlammabzugseinrichtung (11) angeordnet sind.

6. Reaktor nach Anspruch 5, dadurch gekennzeichnet, daß sich auf dem Siebboden (3) eine Kieselschüttschicht (4) befindet.

7. Reaktor nach Anspruch 5, dadurch gekennzeichnet, daß der Siebboden (3) aus zwei parallelen Siebgittern besteht, die mehrere Lagen Schaumpolystyrenmaterial in körniger Form einspannen.

8. Reaktor nach Anspruch 5 bis 7, dadurch gekennzeichnet, daß die Aufwuchsträgermaterialschicht (2) mindestens 20 cm stark ist.

## Claims

1. Process for the continuous microbiological treatment of highly polluted wastewater in reactors with biomass in the form of suspended microorganisms or microorganism flocs, characterized in that the wastewater to be treated flows through a reaction space from top to bottom and is there biologically treated in the presence of suspended biomass, then flows through a filter layer of a buoyant support material which is suitable for the growth of microorganisms, has a density less than one and a granulation in the range between one and twenty millimetres, which filter layer retains and concentrates a part of the suspended microorganisms in the reaction space via the biomass which is growing on the surface of the filter grain and in the pore spaces and acts as secondary filter and which filter layer, owing to the batchwise injection of a gas or owing to the increase in the flow velocity in the reactor can be made turbulent in such a manner that a part of the grown biomass is detached from the floating filter layer and is taken off at the bottom of the reactor.

2. Process according to Claim 1, characterized in that by agitation or establishing a circulation in the water body above the filter layer, complete mixing is performed.

3. Process according to Claims 1 or 2, characterized in that flocculant is added to the reaction space.

4. Process according to Claims 1 to 3, characterized in that air or pure oxygen is introduced into the reaction space.

5. Reactor for the continuous microbiological treatment of highly polluted wastewater in reactors with biomass in the form of suspended microorganisms or microorganism flocs, having devices for dirty water feed (5, 6), clean water outflow (8) and nutrient metering to carry out the process according to Claim 1, characterized in that the reactor (1) has a sieve plate (3) beneath a support-material-free reaction space (12), which sieve plate is impermeable to the individual granules of a growth-support material (2) layer which floats beneath it and which material has a density less than 1 g/cm³ and a granulation in the range between one and twenty millimetres, and in that beneath this sieve plate (3) with filter layer there are arranged a feed port (9) for the batchwise introduction of a gas, and in the upper part of the reactor (1) a corresponding gas outlet opening, and at the bottom of the reactor (1) a sludge take-off device (10), and above the sieve plate (3) a sludge take-off device (11).

6. Reactor according to Claim 5, characterized in that a loose gravel bed (4) is situated on the sieve plate (3).

7. Reactor according to Claim 5, characterized in that the sieve plate (3) consists of two parallel sieve gratings which hold a plurality of layers of foamed polystyrene material in granular form.

8. Reactor according to Claims 5 to 7, characterized in that the growth-support-material layer (2) is at least 20 cm thick.

## Revendications

1. Procédé de traitement microbiologique continu d'eau usée fortement polluée dans des réacteurs à biomasse sous la forme de micro-organismes suspendus ou de flocons de micro-organismes, caractérisé en ce que l'eau usée à traiter s'écoule du haut vers le bas à travers un espace de réaction et y est traitée, par voie biologique, en présence d'une biomasse suspendue, et en ce qu'elle coule ensuite à travers une couche de filtre faite d'un matériau vecteur capable de flotter, approprié à la croissance de micro-organismes, ayant une densité inférieure à un et une granulométrie dans le domaine compris entre un et vingt millimètres, laquelle couche retient et concentre, dans l'espace de réaction, une partie des micro-organismes suspendus grâce à la biomasse, croissant sur la surface du grain de filtre et dans les espaces de pores et agissant en tant que filtre secondaire, et qui peut être soumise, grâce à l'insufflation discontinue d'un gaz ou grâce à l'augmentation de la vitesse d'écoulement dans le réacteur, à un tourbillonnement tel qu'une partie de la biomasse en croissance se détache de la couche de filtre flottante et est retirée au fond du réacteur.

2. Procédé selon la revendication 1, caractérisé en ce qu'un mélange complet a lieu grâce à une agitation ou grâce au réglage d'un mouvement de circulation dans la pièce d'eau située au-dessus de la couche de filtre.

3. Procédé selon les revendications 1 ou 2, caractérisé en ce que l'on ajoute un agent de floculation dans l'espace de réaction.

4. Procédé selon les revendications 1 à 3, caractérisé en ce que l'on introduit, dans l'espace de réaction, de l'air ou de l'oxygène pur.

5. Réacteur de traitement microbiologique continu d'eau usée fortement polluée dans des réacteurs à biomasse sous la forme de micro-organismes suspendus ou de flocons de micro-organismes, avec des équipements pour l'alimentation en eau brute (5,6), l'évacuation de l'eau pure (8) et le dosage des nutriments en vue de l'exécution du procédé selon la revendication 1, caractérisé en ce que le réacteur (1) possède en dessous d'un espace de réaction (12), exempt de matériau vecteur, un fond à tamis (3), qui est imperméable vis-à-vis des grains individuels d'une couche, flottant en dessous, d'un matériau vecteur de croissance (2), ayant une densité inférieure à 1 g/cm³ et une granulométrie dans le domaine compris entre un et vingt millimètres, et en ce que l'on dispose, en dessous de ce fond à tamis (3) à couche de filtre, une tubulure d'alimentation (9) destinée à l'introduction discontinue d'un gaz, et, dans la partie supérieure du réacteur (1), un orifice d'évacuation de gaz correspondant, ainsi qu'au fond du réacteur (1), un équipement de retrait de la boue (10) et, au-dessus du fond à tamis (3), un équipement de retrait de la boue (11).

6. Réacteur selon la revendication 5, caractérisé en ce que, sur le fond à tamis (3), se trouve une couche de produit siliceux en vrac (4).

7. Réacteur selon la revendication 5, caractérisé en ce que le fond à tamis (3) se compose de deux grilles de tamis parallèles, qui contiennent, sous forme granulaire, plusieurs couches de matériau de polystyrène alvéolaire.

8. Réacteur selon les revendications 5 à 7, caractérisé en ce que la couche de matériau vecteur de croissance (2) est au moins d'une épaisseur de 20 cm.
